# EUROPÄISCHE PATENTANMELDUNG

(11) **EP 3 812 304 A1**
(43) Veröffentlichungstag der Anmeldung: **28.04.2021**
(21) Anmeldenummer: 19205118.3
(22) Anmeldetag: 24.10.2019
(51) Int. Cl.: B65G 1/04, B65G 1/06, G05D 1/02, B65G 23/44, G01D 5/244

(54) **VORRICHTUNG ZUR WEGMESSUNG UND/ODER POSITIONSBESTIMMUNG EINES IN EINER LOGISTIKANLAGE EINGESETZTEN FAHRZEUGS UND KANALFAHRZEUGE**

(71) Anmelder: LTW Intralogistics GmbH, 6922 Wolfurt (AT)
(72) Erfinder: Schwarzmann, Matthias, 6866 Andelsbuch (AT); Hopp, Simon, 6974 Gaißau (AT)
(74) Vertreter: Hentrich Patentanwälte PartG mbB

(57) **Zusammenfassung**

Vorrichtung (200) zur Wegmessung und/oder Positionsbestimmung eines in einer Logistikanlage eingesetzten Fahrzeugs, umfassend ein erstes Laufrad (214), das mit einem Drehgeber (212) zur Messung des vom ersten Laufrad (214) zurückgelegten Wegs verbunden ist, wobei ein zweites Laufrad (216) vorhanden ist, welches achsparallel unter einem vorbestimmten Abstand zu dem ersten Laufrad (214) angeordnet ist, und wobei das erste Laufrad (214) mit dem zweiten Laufrad (216) durch einen Zugmitteltrieb (220) getrieblich gekoppelt ist

## Beschreibung

Die Erfindung betrifft eine Vorrichtung zur Wegmessung und/oder Positionsbestimmung eines in einer Logistikanlage eingesetzten Fahrzeugs. Die Logistikanlage kann als eine Intralogistikanlage ausgestaltet sein, wobei die Vorrichtung beispielsweise in einem Regallager oder in einer Vorzone als Teil der Vorzonenfördertechnik Einsatz findet. Die Erfindung betrifft außerdem ein Kanalfahrzeug für ein Regallager, das eine Steuereinrichtung aufweist und welches ein Fahrgestell umfasst, dem eine Mehrzahl von Rädern sowie eine Antriebseinrichtung für den motorischen Antrieb mindestens eines der Räder für eine Bewegung in Lagerkanälen des Regallagers zugeordnet ist, wobei ein Lastaufnahmemittel vorhanden ist zur Aufnahme mindestens eines Ladehilfsmittels und wobei eine elektrisch mit der Steuereinrichtung verbundene Vorrichtung zur Messung des vom Kanalfahrzeug zurückgelegten Wegs vorhanden ist, welche ein erstes Laufrad aufweist, das mit einem Drehgeber zur Messung des vom ersten Laufrad zurückgelegten Wegs verbunden ist.

In der EP 3 097 026 A1 ist ein Kanalfahrzeug gezeigt, welches ein passiv mit- oder umlaufendes Laufrad mit Drehgebern umfasst, um den zurückgelegten Weg und damit die Position des Kanalfahrzeugs zu bestimmen. Auch in der WO 2015 / 131 924 A1 ist ein Kanalfahrzeug beschrieben, das mit mehreren optischen in bzw. entgegen der Fahrtrichtung ausgerichteten Sensorelementen ausgestattet ist. Zusätzlich weist dieses Kanalfahrzeug eine Lageerfassungseinrichtung auf, die ausgestaltet ist, die Absolutposition des Kanalfahrzeugs beispielsweise mittels Inkrementalgebern von angetriebenen Rädern zu bestimmen. In dieser Druckschrift wird das Problem angesprochen, dass beim Einfahren eines Kanalfahrzeugs in einen Lagerkanal Schlupf auftreten kann, der beispielsweise durch zumindest teilweises Durchdrehen der Antriebsrollen gekennzeichnet ist. Hierbei wird eine sehr aufwändige Lösung vorgeschlagen, wonach zusätzliche optische Sensoren zur Erfassung des Kanalendes vorzusehen sind, um mit Hilfe dieser zusätzlichen Sensoren dann eine korrigierte Position des Kanalfahrzeugs zu bestimmen.

Es ist die Aufgabe der vorliegenden Erfindung, eine Vorrichtung zur Wegmessung und/oder Positionsbestimmung eines in einer Logistikanlage eingesetzten Fahrzeugs und mehrere Kanalfahrzeuge anzugeben, die einen vereinfachten Aufbau und eine verbesserte Wegmessung und/oder Positionsbestimmung bereitstellen.

Diese Aufgabe wird gelöst durch eine Vorrichtung mit dem Merkmalsbestand des Anspruchs 1, durch ein erstes Kanalfahrzeug mit dem Merkmalsbestand des Anspruchs 11 und durch ein zweites Kanalfahrzeug mit dem Merkmalsbestand des Anspruchs 14. Vorteilhafte Ausgestaltungen mit zweckmäßigen Weiterbildungen der Erfindung sind in den abhängigen Ansprüchen angegeben

Dabei liegt allen Gegenständen der unabhängigen Ansprüche die Erkenntnis zugrunde und schließt diese mit ein, dass beim Einfahren eines Kanalfahrzeugs oder auch eines Regalbediengeräts in einen Lagerkanal Schlupf auftreten oder aufgrund eines vorhandenen Spalts ein freies Weiterdrehen oder Stehenbleiben von Messrädern erfolgen kann, wenn eine passive Laufrolle, d.h. eine unangetriebene Laufrolle verwendet wird. Beim Einfahren unterliegt die passive Lagerrolle abschnittsweise keinerlei Reibung mit dem Untergrund und führt aufgrund der inneren Reibung dort ggfs. überhaupt keine Umdrehung aus, sodass ein verfälschtes Ergebnis durch einen Drehgeber bei der Wegmessung und/oder der Positionsbestimmung die Folge ist, wobei diesem Problem erfindungsgemäß dadurch begegnet wird, dass stets ein zweites Laufrad Einsatz findet, das entweder dazu genutzt wird, um das mit einem Drehgeber verbundene erste Laufrad mitanzutreiben, oder das selbst mit einem Drehgeber ausgestattet ist, um das dem Schlupf unterliegende oder sich am Spalt befindende erste Laufrad bei der Wegmessung und/oder Positionsbestimmung zu unterstützen. Wenn die innere Reibung beim Drehgeber des Laufrads demgegenüber deutlich geringer ausfällt, so drehte sich das am Spalt befindliche Laufrad - gebremst - weiter, was ebenfalls zu einer Fehlbestimmung führen könnte, die nun aber durch die Berücksichtigung der Umdrehung eines zweiten Laufrads unterbunden ist.

Die erfindungsgemäße Vorrichtung zeichnet sich deshalb insbesondere dadurch aus, dass ein zweites Laufrad vorhanden ist, welches achsparallel unter einem vorbestimmten Abstand zu dem ersten Laufrad angeordnet ist, und dass das erste Laufrad mit dem zweiten Laufrad durch einen Zugmitteltrieb getrieblich gekoppelt ist. Damit ist der Vorteil verbunden, dass sowohl das erste, unangetriebene Laufrad, welches mit dem Drehgeber zur Messung des vom ersten Laufrad zurückgelegten Wegs verbunden ist, als auch das zweite, unangetriebene Laufrad stets gemeinsam umlaufen und somit Spalte, beispielsweise Spalte zwischen der Hubplattform eines Regalbediengerätes und dem Lagerkanal, nicht mehr zu Fehlermittlungen beim Einfahren eines Fahrzeugs in einen Lagerkanal führen können. Zusätzlich wird Schlupf vermieden.

Um außerdem auch für den Zugmitteltrieb selbst eine schlupffreie Lösung bereitzustellen, hat es sich als vorteilhaft erwiesen, wenn die Laufräder jeweils ein Zahnrad aufweisen und wenn die Zahnräder durch den Zugmitteltrieb getrieblich miteinander gekoppelt sind.

Dabei ist es möglich, dass die Laufräder auf dem Zugmitteltrieb selbst abrollen. Um jedoch auch einen Schlupf zwischen dem Zugmitteltrieb und dem Untergrund hinreichend zu vermeiden, hat es sich als vorteilhaft erwiesen, wenn die Laufräder jeweils eine Laufrolle umfassen, deren Durchmesser größer ist als der Durchmesser der versetzt zur Laufrolle angeordneten Zahnräder. Damit ist also der Zugmitteltrieb - anders als bei einem Kettenfahrzeug - nicht dafür verwendet, um mit dem Untergrund wechselzuwirken, da diese Wechselwirkung durch die jeweilige Laufrolle der Laufräder realisiert ist.

Zur zusätzlichen Vermeidung von Schlupf am Zugmitteltrieb hat es sich als sinnvoll erwiesen, wenn dieser eine Kette oder einen Zahnriemen umfasst. Dabei ist die Möglichkeit eröffnet, dass die Kette oder der Zahnriemen ein oberes Trum und ein unteres Trum umfasst, und dass zumindest einem der Trume eine Spanneinrichtung zur Spannung der Kette oder des Zahnriemens zugeordnet ist. Damit wird gewährleistet, dass die Kette oder der Zahnriemen hinreichend fest und straff gehalten ist, um dort jeglichen Schlupf beim gemeinsamen Umlaufen des ersten Laufrads und des zweiten Laufrads zu vermeiden. Durch geeignete Stellmittel oder Stellschrauben kann die Spannung der Spanneinrichtung gelöst oder verstärkt werden.

Um der Kette oder dem Zahnriemen eine zusätzliche Führung bieten zu können, und um eine möglichst schonende Anlage der Spanneinrichtung an der Kette oder dem Zahnriemen bereitzustellen, hat es sich als vorteilhaft erwiesen, wenn die Spanneinrichtung eine konvex geformte Gleitplatte umfasst, die das Trum der Kette an ihrer den Zahnrädern abgewandten Seite oder das Trum des Zahnriemens an seiner zahnfreien Seite beaufschlagt. Dabei ist die Möglichkeit eröffnet, dass dem Einen aus Gleitplatte und Kette oder Zahnriemen eine, ggf. durch Kettenglieder gebildete, Führungsnut zugeordnet ist, wobei dem Anderen aus Gleitplatte und Kette oder Zahnriemen ein zur Führungsnut korrespondierendes Führungsglied zugeordnet ist. Damit wird die Kette oder der Zahnriemen hinsichtlich ihrer bzw. seiner Lage zusätzlich gesichert. In diesem Zusammenhang kann es von Vorteil sein, wenn die Gleitplatte die Führungsnut umfasst, in der die Kette oder der Zahnriemen selbst geführt ist.

Zur sicheren Festlegung der Vorrichtung an einem Fahrzeug, beispielsweise an einem Kanalfahrzeug oder auch einem Regalbediengerät, ist die Möglichkeit gegeben, dass eine Montageeinrichtung vorhanden und ausgestaltet ist, an einem Fahrgestell des Fahrzeugs montiert zu werden.

Um Unebenheiten bei der Einfahrt in den Lagerkanal oder aufgrund von vorhandenen Stufen auszugleichen, ist es sinnvoll, wenn die Montageeinrichtung mindestens einen federgelagerten Montageblock zur Festlegung an dem Fahrgestell des Fahrzeugs aufweist.

Zum Ausgleich von Unebenheiten trägt außerdem bei, wenn die Montageeinrichtung mindestens einen Montagestift zur Aufnahme in einer Montagestiftaufnahme an dem Fahrgestell des Fahrzeugs aufweist, derart, dass die Vorrichtung relativ zum Fahrgestell begrenzt verdrehbar gelagert ist.

Da in einem Regallager eingesetzte Fahrzeuge teilweise sehr weite Strecken zurücklegen müssen, ist es von Vorteil, wenn der Drehgeber als ein Multiturn-Absolutwertgeber gebildet ist.

Die erfindungsgemäße Vorrichtung zur Wegmessung entfaltet ihre Vorteile beim Einsatz an einem Kanalfahrzeug für ein Regallager. Die für die erfindungsgemäße Vorrichtung erwähnten Vorteile und vorteilhaften Ausgestaltungen gelten daher in gleichem Maße für ein erfindungsgemäßes Kanalfahrzeug, das mit einer solchen Vorrichtung zur Wegmessung ausgestattet ist.

Ein solches Kanalfahrzeug umfasst eine Steuereinrichtung und ein Fahrgestell, dem eine Mehrzahl von Rädern sowie eine Antriebseinrichtung für den motorischen Antrieb mindestens eines der Räder für eine Bewegung in Lagerkanälen des Regallagers zugeordnet ist. Dabei können auch mehrere Räder gemeinsam umlaufen, wobei auch hier ein entsprechender Zugmitteltrieb Einsatz finden kann. Es ist auch möglich, dass den Rädern eine Laufkette zugewiesen ist, so dass die Fortbewegung des Kanalfahrzeugs nach Art eines Kettenfahrzeugs erfolgt. Das Kanalfahrzeug weist ein Lastaufnahmemittel auf, um ein Ladehilfsmittel oder eine Last unmittelbar aufnehmen zu können. Dieses Kanalfahrzeug weist zudem eine vorstehend erläuterte Vorrichtung zur Wegmessung und/oder Positionsbestimmung auf, die elektrisch mit der Steuereinrichtung verbunden ist und die den vom Kanalfahrzeug zurückgelegten Weg und damit auch die Position des Kanalfahrzeugs ermitteln und ausgeben kann. Vorzugsweise weist das Kanalfahrzeug zudem eine Hubeinrichtung auf, die mit dem Lastaufnahmemittel oder Last wechselwirkt, um diese anzuheben oder abzusenken.

Um die Maschinensicherheit zu gewährleisten und um ein betriebssicheres Kanalfahrzeug bereitzustellen, hat es sich als vorteilhaft erwiesen, wenn eine von der Vorrichtung zur Wegmessung und/oder Positionsbestimmung in Fahrzeuglängsrichtung versetzt, insbesondere um einen vorgegebenen Abstand versetzt, angeordnete zweite Vorrichtung zur Wegmessung und/oder Positionsbestimmung vorhanden ist, die ebenfalls elektrisch mit der Steuereinrichtung verbunden ist. Auch die zweite Vorrichtung weist dabei die vorteilhaften Ausgestaltungen und zweckmäßigen Weiterbildungen auf, wie die eingangs bereits näher erläuterte erste Vorrichtung zur Wegmessung.

Um das Kanalfahrzeug möglichst kompakt zu halten und um einen Ausgleich der Gewichtsverteilung zu erzielen, ist die Möglichkeit gegeben, dass die Vorrichtung zur Wegmessung und/oder Positionsbestimmung an einer ersten Fahrzeugseite angeordnet ist, und dass die zweite Vorrichtung zur Wegmessung und/oder Positionsbestimmung an einer zweiten Fahrzeugseite angeordnet ist.

Ein weiteres erfindungsgemäßes Kanalfahrzeug für ein Regallager weist ebenfalls eine Steuereinrichtung und ein Fahrgestell auf, dem eine Mehrzahl von Rädern sowie eine Antriebseinrichtung für den motorischen Antrieb mindestens eines der Räder für eine Bewegung in Lagerkanälen des Regallagers zugeordnet ist. Auch dieses Kanalfahrzeug weist ein Lastaufnahmemittel zur Aufnahme mindestens eines Ladehilfsmittels oder einer Last unmittelbar auf. Auch diesem Lastaufnahmemittel kann eine Hubeinrichtung zugeordnet sein. Zusätzlich ist eine Vorrichtung zur Messung des vom Kanalfahrzeug zurückgelegten Wegs vorhanden, die mit der Steuereinrichtung elektrisch verbunden ist. Die Vorrichtung weist dabei ein erstes Laufrad auf, das mit einem Drehgeber zur Messung des vom ersten Laufrad zurückgelegten Wegs verbunden ist. Zusätzlich weist die Vorrichtung zur Messung des vom Kanalfahrzeug zurückgelegten Wegs ein zweites Laufrad auf, welches achsparallel in Fahrzeuglängsrichtung unter einem vorbestimmten Abstand zu dem ersten Laufrad angeordnet ist und welches ebenfalls mit einem zweiten Drehgeber zur Messung des vom zweiten Laufrad zurückgelegten Wegs verbunden ist. Die Steuereinrichtung ist dabei ausgebildet, einen zeitlichen Verlauf des von dem Drehgeber detektierten Wegs und einen zeitlichen Verlauf des von den zweiten Drehgeber detektierten Wegs zu erfassen. Die Steuereinrichtung kann die beiden zeitlichen Verläufe auswerten und ist ausgebildet, im Falle einer fehlenden zeitlichen Wegveränderung im Verlauf des der detektierten Wegs des Einen der beiden Drehgeber den zeitgleich vom Anderen der beiden Drehgeber detektierten Weg für die Wegmessung des Kanalfahrzeugs zu berücksichtigen.

Beim Einfahren in den Lagerkanal ist ein Spalt vorhanden, so dass zunächst das unangetriebene erste Laufrad oder das unangetriebene zweite Laufrad den vorhandenen Spalt übertritt bevor das andere der beiden Laufräder den Spalt übertritt. Während des Übertretens des Spaltes fehlt ein Wechselwirken mit dem Untergrund, so dass dies eine Fehlmessung der Wegmessung zur Folge haben kann. Erfindungsgemäß wird dabei dann die Wegmessung des anderen der Laufräder herangezogen um den tatsächlich gefahrenen Weg zu "ergänzen".

In diesem Zusammenhang ist es auch von Vorteil, wenn die Steuereinrichtung außerdem ausgebildet ist, bei zwei in vorgegebenem, insbesondere zeitabhängigen oder geschwindigkeitsabhängigen Abstand aufeinanderfolgenden fehlenden zeitlichen Wegveränderungen der von den Drehgebern detektierten Wege, einen der beiden zurückgelegten Wege bei der Wegmessung des Kanalfahrzeugs unberücksichtigt zu lassen.

Damit wird ebenfalls vermieden, dass der zurückgelegte Weg aufgrund des Spalts der beim Einfahren in den Lagerkanal auftritt nicht doppelt berücksichtigt wird. Es kann daher nicht zu einer Fehlberechnung des zurückgelegten Wegs und/oder der Position des Kanalfahrzeugs kommen. Dabei kann die innere Reibung des Drehgebers hinreichend groß sein, dass das unangetriebene Laufrad (nahezu) unmittelbar dann seine Umdrehung stoppt, wenn es keinen Kontakt zum Untergrund mehr hat. Dies erleichtert die Auswertung.

Alternativ kann der Reibungskoeffizient beim Drehgeber aber auch derart gewählt sein, dass sich das Laufrad am Spalt noch - ggfs. sich verlangsamend - weiterdreht, so dass auch diese Umdrehung bei der Auswertung Berücksichtigung findet. Hierbei kann dann ein Abgleich erfolgen zwischen der Soll- oder Ist-Fahrgeschwindigkeit des Kanalfahrzeugs und der Umdrehung des passiven Laufrads, so dass Abweichungen auf das Vorliegen eines Spalts oder auf das Vorliegen von Schlupf schließen lassen; insbesondere dann, wenn auch das zweite Laufrad zeitlich versetzt dasselbe - ggfs. sich verlangsamende - Umdrehungsprofil wie das erste Laufrad aufweist.

In einer weiteren Ausgestaltung kann in der Steuereinrichtung für die Wegmessung und/oder Positionsbestimmung die Distanz zwischen dem Hubschlitten eines Regalbediengeräts bis zu einem Spalt hinterlegt sein, so dass die Umdrehungen des Drehgebers bei der Wegmessung und/oder Positionsbestimmung außer Betracht bleiben, die ab der zuvor definierten zurückgelegten Distanz des Kanalfahrzeugs eintreten.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine perspektivische Ansicht einer Vorrichtung zur Wegmessung und/oder Positionsbestimmung eines in einer Logistikanlage eingesetzten Fahrzeugs, insbesondere eines Kanalfahrzeugs,
- Fig. 2: eine erste Seitenansicht der Vorrichtung nach Figur 1,
- Fig. 3: eine zweite Seitenansicht der Vorrichtung nach Figur 1,
- Fig. 4: eine Draufsicht auf die Vorrichtung nach Figur 1,
- Fig. 5: eine perspektivische Ansicht eines Kanalfahrzeugs für ein Regallager mit zwei der in Figuren 1 bis 4 gezeigten Vorrichtungen zur Wegmessung und/oder Positionsbestimmung,
- Fig. 6: eine Draufsicht auf das Kanalfahrzeug nach Figur 5,
- Fig. 7: eine Seitenansicht des Kanalfahrzeugs aus Figur 5, und
- Fig. 8: eine exemplarische Messung des zurückgelegten Wegs (s in Metern) von einem ersten Drehgeber (durchgezogen dargestellt) und einem zweiten Drehgeber (strichliert dargestellt), einer Wegmessvorrichtung aufgetragen über der Zeit (t in Sekunden), wobei die Situation des Einfahrens eines Kanalfahrzeugs in einen Lagerkanal abgebildet ist, und wobei der Reibungskoeffizient an den Drehgebern/Laufrädern groß genug gewählt ist, dass die Umdrehung (quasi) umgehend beim Erreichen eines Spalts stoppt.

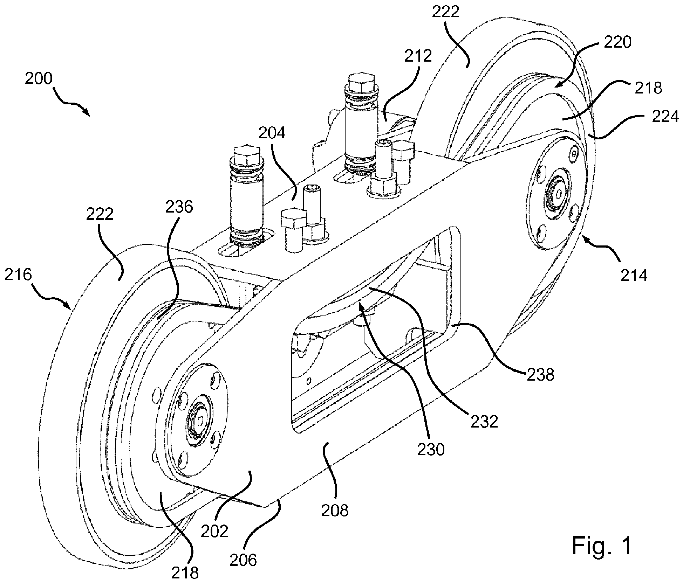

In den Figuren 1 bis 4 ist eine Vorrichtung 200 zur Wegmessung und/oder Positionsbestimmung eines in einer Logistikanlage eingesetzten Fahrzeugs, insbesondere eines Kanalfahrzeugs 100 gezeigt. Diese Vorrichtung 200 umfasst einen Grundkörper 202, der aus einer Deckplatte 204 und einer parallel zur Deckplatte 204 angeordneten Grundplatte 206 sowie einer die Deckplatte 204 mit der Grundplatte 206 verbindenden ersten Seitenplatte 208 gebildet ist. Zusätzlich ist eine die Deckplatte 204 mit der Grundplatte 206 verbindende zweite Seitenplatte 210 vorhanden, die parallel zur ersten Seitenplatte 208 orientiert ist.

Die Vorrichtung 200 umfasst ein erstes Laufrad 214, das mit einem Drehgeber 212 zur Messung des vom ersten Laufrad 214 zurückgelegten Wegs verbunden ist. Das erste Laufrad 214 ist zwischen der ersten Seitenplatte 208 und der Seitenplatte 210 des Grundkörpers 202 drehbar, aber motorisch unangetrieben auf einer Achse gelagert. Die erste Seitenplatte 208 und die zweite Seitenplatte 210 sind zur Einsparung von Material und zur Gewichtsreduzierung jeweils in Richtung der Achse des ersten Laufrads 214 hin verjüngend gebildet.

Die Vorrichtung 200 weist zusätzlich ein zweites Laufrad 216 auf, das ebenfalls zwischen der ersten Seitenplatte 208 und der zweiten Seitenplatte 210 auf einer Achse drehbar gelagert ist. Auch auf dieser Seite sind die erste Seitenplatte 208 und die zweite Seitenplatte 210 zur Material- und Gewichtseinsparung jeweils in Richtung der Achse des zweiten Laufrads 216 hin verjüngend gebildet.

Das erste Laufrad 214 ist mit dem zweiten Laufrad 216 durch einen Zugmitteltrieb 220 getrieblich gekoppelt. Der Zugmitteltrieb 220 gewährleistet, dass beim Umlaufen des ersten Laufrads 214 zugleich das zweite Laufrad 216 mitgenommen wird und mit umläuft. Umgekehrt wird aber auch beim Umlaufen des zweiten Laufrads 216 das erste Laufrad 214 mitgenommen.

Vorliegend ist dem ersten Laufrad 214 ein Drehgeber 212 in Form eines Multiturn-Absolutwertgebers zugeordnet, so dass dieser die Drehbewegung des ersten Laufrads 214 erfasst. Der Einsatz eines Inkrementaldrehgebers ist alternativ oder ergänzend vorgesehen. Der Drehgeber 212 ist dabei selbst an der zweiten Seitenplatte 210 mit Montagemitteln befestigt. Dieser Drehgeber 212 ist also ausgebildet, den vom ersten Laufrad 214 zurückgelegten Weg zu messen. Wird die Vorrichtung 200 zur Wegmessung und/oder Positionsbestimmung an einem in einem Regallager eingesetzten Fahrzeug verwendet, so wird bei dem Übergang der Vorrichtung 200 in einen Lagerkanal gewährleistet, dass der Drehgeber 212 den tatsächlich zurückgelegten Weg auch beim Übertritt über einen Spalt erfasst, da sich die beiden Laufräder 214, 216 gegenseitig aufgrund des verwendeten Zugmitteltriebs 220 mitnehmen.

Vorliegend weisen die Laufräder 214, 216 jeweils eine Laufrolle 222 auf, die während der Wegmessung mit dem Untergrund wechselwirkt. Die Laufrolle 222 rollt - sofern vorhanden - also auf dem Untergrund ab und der Drehgeber 212 misst die dabei entstehende Verdrehung des Laufrads 214, 216. Versetzt zur Laufrolle 222 ist dabei jeweils ein Zahnrad 218 angeordnet, dessen Durchmesser geringer ist als der Durchmesser der Laufrolle 222. Die Zahnräder 218 sind dabei drehfest gegenüber den Laufrollen 222 der Laufräder 214, 216 gelagert, so dass eine Drehung der Laufrollen 222 eine Umdrehung der Zahnräder 218 zur Folge hat und umgekehrt. Der Zugmitteltrieb 220 umfasst vorliegend eine Kette 224 mit Kettengliedern, die mit den Zähnen der Zahnräder 218 beim Umlaufen der Laufräder 214, 216 kämmen.

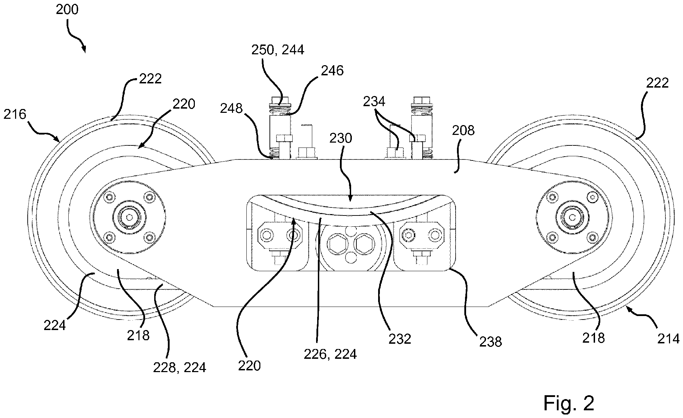

Aus der Seitenansicht der Vorrichtung 200 nach Figur 2 wird ersichtlich, dass die Kette 224 ein oberes Trum 226 und ein unteres Trum 228 umfasst, und dass zumindest einem der Trume 226, 228, vorliegend dem oberen Trum 226, eine Spanneinrichtung 230 zur Spannung der Kette 224 zugeordnet ist. Diese Spanneinrichtung 230 weist eine konvex geformte Gleitplatte 232 auf, die das obere Trum 226 der Kette 224 an ihrer den Zahnrädern 218 abgewandten Seite beaufschlagt. Die Spannung der Spanneinrichtung 230 lässt sich durch das Verdrehen oder Einstellen von Stellschrauben 234 variieren.

Aus Figur 1 wird wiederum ersichtlich, dass die Kette 224 an ihrer den Zahnrädern 218 abgewandten Seite mit einer Art Führungsnut 236 gebildet ist, in die ein nicht näher erkennbares Führungsglied der Gleitplatte 232 eingreift, sodass die Kette 224 in ihrer Lage lateral fixiert ist. Das Führungsglied erstreckt sich dabei vorzugsweise entlang der gesamten Gleitplatte 232 oder zumindest entlang des Bereiches, entlang welchem die Kette 224 an der Gleitplatte 232 geführt ist. Um insgesamt das Gewicht der Vorrichtung 200 zu reduzieren und um einen vereinfachten Wartungszugang zur Kette 224 zu gewährleisten, ist die erste Seitenplatte 208 mit einer Ausnehmung 238 versehen, die vorliegend rein beispielhaft rechteckig mit abgerundeten Ecken geformt ist.

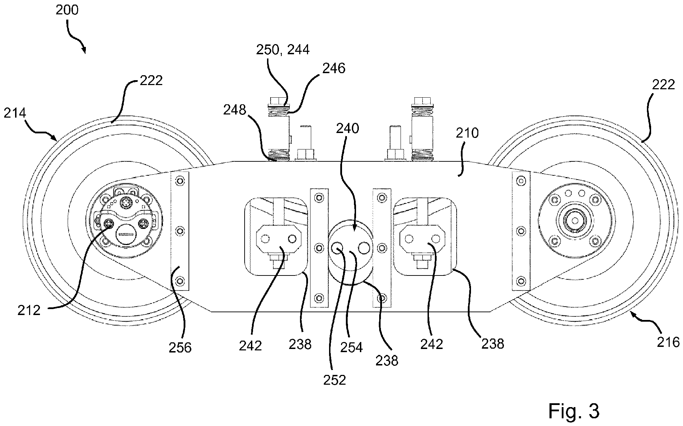

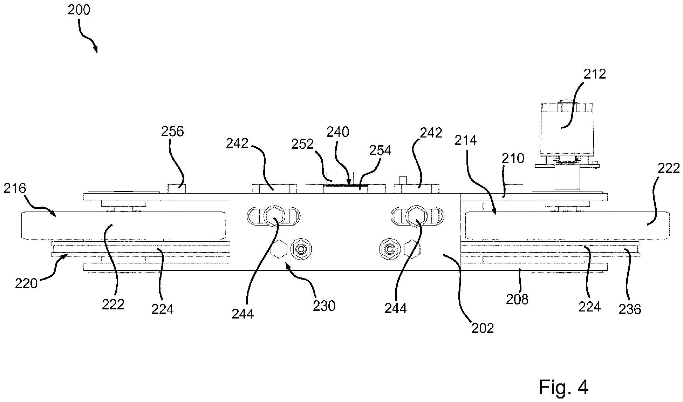

Anhand von Figur 3, der zweiten Seitenansicht der Vorrichtung 200, ist zu erkennen, dass diese zusätzlich eine Montageeinrichtung 240 umfasst, die ausgestaltet ist, an einem Fahrgestell 102 eines Fahrzeugs montiert zu werden. Die Montageeinrichtung 240 ist vorliegend mehrteilig gestaltet mit einem zentral angeordneten Montageteil 254, dem vorliegend zwei Montagestifte 252 zugeordnet sind, die ausweislich der Draufsicht nach Figur 4 über die zweite Seitenplatte 210 hervorstehen und vorzugsweise als ein Gewinde aufweisende Schrauben gebildet sind. Die Montagestifte 252 des Montageteils 254, welches vorliegend rein beispielhaft zylindrisch geformt ist, können in geeignete - insbesondere als Gewinde gebildete - Montagestiftaufnahmen an dem Fahrgestell 102 eines Fahrzeugs derart aufgenommen werden, dass die Vorrichtung 200 relativ zum Fahrgestell 102 des Fahrzeugs begrenzt verdrehbar gelagert ist. Das Montageteil 254 selbst ist mit seinen Montagestiften 252 in einer Ausnehmung 238 der zweiten Seitenplatte 210 positioniert, die vorliegend rein exemplarisch annähernd oval geformt ist. An der zweiten Seitenplatte 210 sind außerdem insgesamt vier Distanzhalter 256 vorhanden oder angebracht, die einen vordefinierten Abstand der Vorrichtung 200 bzw. des Grundkörpers 202 von einem Fahrzeug oder von dessen Fahrgestell 102 vorgeben oder einstellen.

In Figur 3 ist zu erkennen, dass der Montageeinrichtung 240 links- und rechtseitig von der oval geformten Ausnehmung 238 jeweils weitere Ausnehmungen 238 zugewiesen sind, die rein exemplarisch rechteckig mit abgerundeten Ecken geformt sind. Durch die seitlichen Ausnehmungen 238 ragt jeweils ein Montageblock 242, der ebenfalls zur Festlegung an dem Fahrgestell 102 des Fahrzeugs ausgelegt ist. Die Montageblöcke 242 sind an einer, insbesondere senkrecht bezüglich der Deckplatte 204 angeordneten Verbindungsschraube 244 der Vorrichtung 200 festgelegt, die vorliegend nur teilweise entlang ihrer Längserstreckung ein Gewinde aufweist. Die Verbindungsschraube 244 durchdringt jeweils die Deckplatte 204, wobei hierzu in der Deckplatte ausweislich Figur 4 entsprechende Langlöcher ausgebildet sind. Innerhalb dieser Langlöcher lässt sich die Verbindungsschraube 244 verkippen, insbesondere dann, wenn auf diese eine Kraft ausgehend von den am Fahrgestell 102 fixierten Montageblöcken 242 eingeleitet wird. Der Grundkörper 202 lässt sich damit betriebssicher um das Montageteil 254 begrenzt verdrehen.

In Figur 3 ist ferner zu erkennen, dass der Verbindungsschraube 244 eine Stützscheibe 248 zugeordnet ist, die sich an der Deckplatte 204 abstützt und die von einem ersten Ende einer Feder 246 beaufschlagt wird. Das zweite Ende der Feder 246 ist an einem Bund 250, mithin am Schraubenkopf der Verbindungsschraube 244 abgestützt, so dass der jeweilige Montageblock 242 durch die gezeigte Feder 246 federgelagert ist. Über die Distanz zwischen dem Bund 250 und der Stützscheibe 248 lässt sich die durch die Feder 246 bereitgestellte Federkraft variieren und/oder festlegen. Durch diese Federlagerung lassen sich Unebenheiten oder Stufen beim Einfahren in einen Lagerkanal oder beim Ausfahren aus einem solchen ausgleichen, wodurch der Grundkörper 202 also Ausweichbewegungen, insbesondere Kippbewegungen ausführen kann. Weil vorliegend ein derart federgelagerter Montageblock 242 sowohl in als auch entgegen der Fahrtrichtung der Vorrichtung 200 vorhanden ist, sind Ausgleichsbewegungen in beiden Richtungen ermöglicht.

Die in den Figuren dargestellte Distanz zwischen den beiden Laufrädern 214, 216 reicht dabei typischerweise aus, um auch größere Spalte überwinden zu können, so dass eine Wegmessung und eine Positionsbestimmung hinreichend genau mit der Vorrichtung 200 erfolgen kann. Sie zeichnet sich durch einen einfachen Aufbau aus, da keine weiteren Sensoren notwendig sind und lediglich ein einziger Drehgeber 212 notwendig ist, um etwaige spaltbedingte oder schlupfbedingte Fehlbestimmungen bei der Wegmessung und/oder der Positionsbestimmung bei der Bewegung eines in einer Logistikanlage eingesetzten Fahrzeugs zu vermeiden.

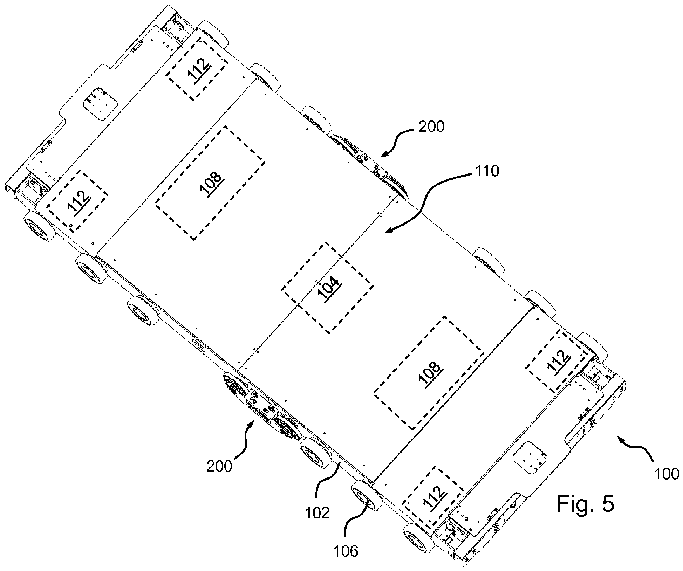

In Figur 5 ist ein Kanalfahrzeug 100 für ein Regallager gezeigt, das mit einer vorstehend erläuterten Vorrichtung 200 zur Wegmessung und/oder Positionsbestimmung ausgestattet ist. Die Laufräder 214, 216 sind dabei unangetrieben und werden bei einer Fortbewegung des Kanalfahrzeugs 100 lediglich durch die Reibung am Untergrund mitbewegt, so dass der Drehgeber 212 diese Bewegung erfassen und daraus den Weg sowie die Position des Kanalfahrzeugs 100 bestimmen kann.

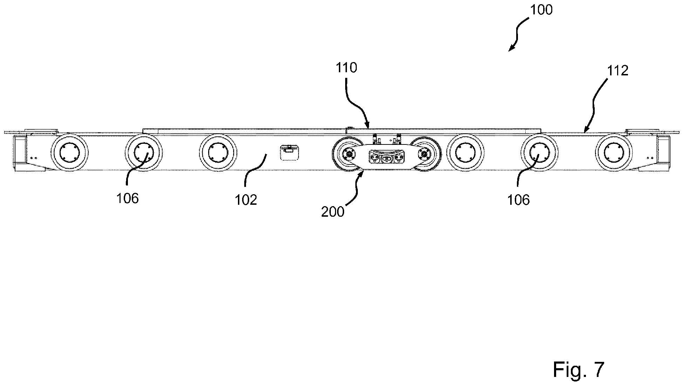

Das Kanalfahrzeug 100 umfasst dabei eine Steuereinrichtung 104 sowie ein Fahrgestell 102, dem eine Mehrzahl von Rädern 106 sowie mindestens eine Antriebseinrichtung 108 für den motorischen Antrieb mindestens eines der Räder 106 für eine Bewegung in Lagerkanälen des Regallagers zugeordnet ist. Das Fahrgestell 102 umfasst dabei eine geeignete Aufnahme, so dass der Drehgeber 212 sich in den Rahmen des Fahrgestells 102 erstreckt und damit die Vorrichtung 200 planflächig mit ihren Distanzhaltern 256 am Fahrgestell 102 angelegt ist. Das Kanalfahrzeug 100 umfasst zusätzlich eine Hubeinrichtung 112, der ein Lastaufnahmemittel 110 zur Aufnahme mindestens eines Ladehilfsmittels oder einer Last unmittelbar zugeordnet ist. Anhand der Seitenansicht nach Figur 7 ist zu erkennen, dass die Räder 106 ebenfalls durch einen Zugmitteltrieb, insbesondere durch einen Kettentrieb miteinander getrieblich verbunden sind, sodass es auch genügt lediglich eines der Räder 106 anzutreiben, wodurch die anderen Räder mitumlaufen. Die Laufräder 214, 216 der Vorrichtung 200 sind demgegenüber unangetrieben oder passiv, so dass deren Umdrehung zur Messung des vom Kanalfahrzeugs 100 zurückgelegten Wegs oder zu dessen Positionsbestimmung herangezogen werden kann.

Es ist zu erkennen, dass zur Erfüllung der für Kanalfahrzeuge 100 relevanten Maschinenrichtlinie eine von der Vorrichtung 200 in Fahrzeuglängsrichtung versetzt angeordnete zweite Vorrichtung 200 zur Wegmessung und/oder Positionsbestimmung vorhanden und elektrisch mit der Steuereinrichtung 104 verbunden ist, die ebenfalls derjenigen nach Figuren 1 bis 4 entspricht. Um einen Gewichtsausgleich links- und rechtsseitig hervorzurufen ist vorliegend die Vorrichtung 200 an einer ersten Fahrzeugseite angeordnet, wobei die zweite Vorrichtung 200 an einer zweiten Fahrzeugseite des Kanalfahrzeugs 100 angeordnet ist.

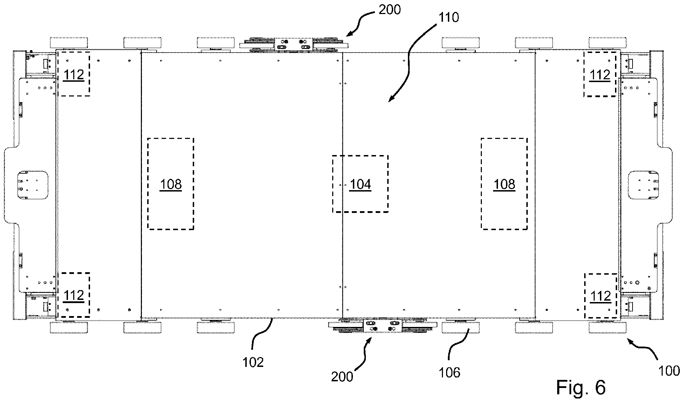

Ein anderes, in den Figuren nicht näher gezeigtes Kanalfahrzeug 100 entspricht dabei im Wesentlichen demjenigen nach Figuren 5 bis 7, wobei dieses nicht die Vorrichtungen 200 nach Figuren 1 bis 4, sondern eine weitere Vorrichtung zur Messung des vom Kanalfahrzeug 100 zurückgelegten Wegs umfasst. Diese weitere Vorrichtung weist - analog zur Vorrichtung 200 nach Figuren 1 bis 4 - ein erstes Laufrad 214 auf, das mit einem Drehgeber 212 zur Messung des vom ersten Laufrad 214 zurückgelegten Wegs verbunden ist. Zusätzlich weist die Vorrichtung zur Messung des vom Kanalfahrzeug 100 zurückgelegten Wegs ein zweites Laufrad 216 auf, welches achsparallel in Fahrzeuglängsrichtung unter einem bestimmten Abstand zu dem ersten Laufrad 214 angeordnet ist, und welches selbst mit einem zweiten Drehgeber 212 zur Messung des vom zweiten Laufrad 216 zurückgelegten Wegs verbunden ist. Das erste Laufrad 214 und das zweite Laufrad 216 sind dabei also im Unterschied zur Vorrichtung 200 nach Figuren 1 bis 4 nicht getrieblich miteinander gekoppelt, da jedem Laufrad 214, 216 ein eigener Drehgeber 212 zugeordnet ist. In dieser Ausgestaltung ist die Steuereinrichtung 104 ausgebildet, einen zeitlichen Verlauf des von dem Drehgeber 212 detektierten Wegs und einen zeitlichen Verlauf des von dem zweiten Drehgeber 212 detektierten Wegs zu erfassen.

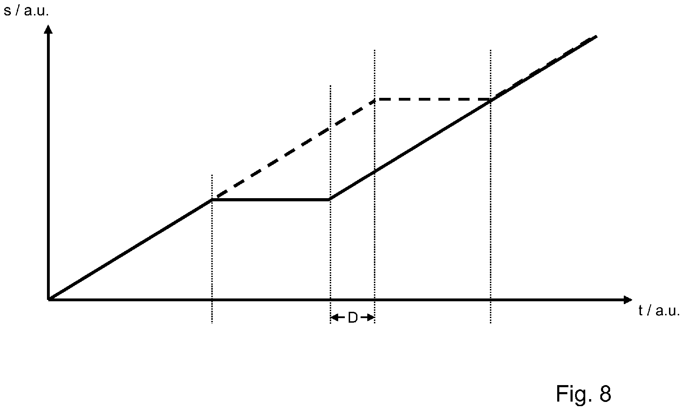

Ein beispielhaftes Diagramm der zeitlichen Verläufe des zurückgelegten Wegs (s-t-Diagramm) der beiden Drehgeber 212 ist für den ersten Drehgeber 212 in Figur 8 als durchgezogene Linie und für den zweiten Drehgeber 212 als strichlierte Linie dargestellt, wobei vereinfachend davon ausgegangen ist, dass die Geschwindigkeit des Kanalfahrzeugs 100 konstant ist, dass die innere Reibung bei den Drehgebern 212 und/oder den Laufrädern 214, 216 jeweils groß genug ist, dass beim fehlenden Kontakt mit dem Untergrund die Umdrehung der Laufräder 214, 216 quasi umgehend stoppt.

Die Steuereinrichtung 104 ist ausgebildet, im Falle einer fehlenden zeitlichen Wegveränderung im Verlauf des detektierten Wegs des Einen der beiden Drehgeber 212 den zeitgleich vom Anderen der beiden Drehgeber 212 detektierten Weg für die Wegmessung des Kanalfahrzeugs 100 zu berücksichtigen.

In dem Diagramm nach Figur 8 äußert sich also ein Übertritt über einen Spalt in den Lagerkanal oder eines Untergrunds durch eine fehlende Veränderung des Weges zumindest eines der beiden Drehgeber 212. In anderen Worten beträgt während des Übertrittes des Spalts die zeitliche Veränderung des Weges gleich Null (ds/dt=0). Sollte zeitgleich jedoch der andere der beiden Drehgeber 212 eine Wegveränderung detektieren (ds/dt≠0), so ist der erfasste Weg bei der Wegbestimmung hinzuzurechnen um Fehlbestimmungen des zurückgelegten Wegs oder der Position des Kanalfahrzeugs 100 aufgrund eines Spaltes oder aufgrund von auftretendem Schlupf zu eliminieren.

Es ist zu erkennen, dass derjenige Drehgeber 212, der den durchgezogenen Verlauf im Schaubild nach Figur 8 entspricht, zuerst über einen Spalt tritt und erst nachfolgend der zweite Drehgeber 212 diesen Spalt durch eine fehlende zeitliche Veränderung des Weges detektiert. Um zu vermeiden, dass diese zweite fehlende zeitliche Veränderung des zurückgelegten Weges in die Ermittlung der Position oder des tatsächlich zurückgelegten Weges des Kanalfahrzeugs 100 einfließt, hat es sich als vorteilhaft erwiesen, dass die Steuereinrichtung 104 darüber hinaus ausgebildet ist, bei zwei in vorgegebenen zeitlichem bzw. geschwindigkeitsabhängigem Abstand (D) aufeinanderfolgenden fehlenden zeitlichen Wegveränderungen der beiden von den Drehgebern 212 detektierten Wege, einen der beiden zurückgelegten Wege bei der Wegmessung des Kanalfahrzeugs 100 unberücksichtigt zu lassen.

Ist die Reibung bei den Drehgebern 212 und/oder den Laufrädern 214, 216 demgegenüber nicht groß genug, so drehen sich die Laufräder 214, 216 - sich verlangsamend - weiter, wenn sie einen Spalt erreichen. Auch dieses sich verlangsamende Umdrehungsprofil des einen Laufrades 214, 216 kann dann auf den Spalt schließen lassen, da das andere Laufrad 214, 216 dieses sich verlangsamende Umdrehungsprofil erst zeitlich versetzt erfährt. Es ist auch die Möglichkeit eröffnet, die Fahrgeschwindigkeit des Kanalfahrzeugs 100 mit der Umdrehung der Laufräder 214, 216 abzugleichen, so dass auch dadurch Abweichungen auf Schlupf oder einen Spalt hindeuten, die bei der Wegmessung und/oder Positionsbestimmung herausgerechnet werden können.

Im Ergebnis zeichnen sich die erfindungsgemäße Vorrichtung 200 und die erfindungsgemäßen Kanalfahrzeuge 100 durch einen vereinfachten konstruktiven Aufbau aus, der dazu führt, dass ein Spalt oder ein entstehender Schlupf bei der Ermittlung des Weges oder der Position einzelner in einer Logistikanlage eingesetzter Fahrzeuge nicht zu Fehlermittlungen führen. Damit sind mit der vorliegenden Erfindung sehr betriebssichere Kanalfahrzeuge 100 sowie eine sehr betriebssichere Vorrichtung 200 zur Wegmessung und/oder Positionsbestimmung eines in einer Logistikanlage eingesetzten Fahrzeugs geschaffen.

### BEZUGSZEICHENLISTE

- 100: Kanalfahrzeug
- 102: Fahrgestell
- 104: Steuereinrichtung
- 106: Rad
- 108: Antriebseinrichtung
- 110: Lastaufnahmemittel
- 112: Hubeinrichtung
- 200: Vorrichtung zur Wegmessung
- 202: Grundkörper
- 204: Deckplatte
- 206: Grundplatte
- 208: erste Seitenplatte
- 210: zweite Seitenplatte
- 212: Drehgeber
- 214: erstes Laufrad
- 216: zweites Laufrad
- 218: Zahnrad
- 220: Zugmitteltrieb
- 222: Laufrolle
- 224: Kette
- 226: oberes Trum
- 228: unteres Trum
- 230: Spanneinrichtung
- 232: Gleitplatte
- 234: Stellschrauben
- 236: Führungsnut
- 238: Ausnehmung
- 240: Montageeinrichtung
- 242: Montageblock
- 244: Verbindungsstift / Verbindungsschraube
- 246: Feder
- 248: Stützscheibe
- 250: Bund (am Kopf der Verbindungsschraube)
- 252: Montagestift
- 254: Montageteil
- 256: Distanzhalter

## Patentansprüche

1. Vorrichtung (200) zur Wegmessung und/oder Positionsbestimmung eines in einer Logistikanlage eingesetzten Fahrzeugs, umfassend ein erstes Laufrad (214), das mit einem Drehgeber (212) zur Messung des vom ersten Laufrad (214) zurückgelegten Wegs verbunden ist, **dadurch gekennzeichnet, dass** ein zweites Laufrad (216) vorhanden ist, welches achsparallel unter einem vorbestimmten Abstand zu dem ersten Laufrad (214) angeordnet ist, und dass das erste Laufrad (214) mit dem zweiten Laufrad (216) durch einen Zugmitteltrieb (220) getrieblich gekoppelt ist.

2. Vorrichtung (200) nach Anspruch 1, **dadurch gekennzeichnet, dass** die Laufräder (214, 216) jeweils ein Zahnrad (218) aufweisen, und dass die Zahnräder (218) durch den Zugmitteltrieb (220) getrieblich miteinander gekoppelt sind.

3. Vorrichtung (200) nach Anspruch 2, **dadurch gekennzeichnet, dass** die Laufräder (214, 216) jeweils eine Laufrolle (222) umfassen, deren Durchmesser größer ist als der Durchmesser der versetzt zur Laufrolle (222) angeordneten Zahnräder (218).

4. Vorrichtung (200) nach einem der Ansprüche 1 bis 3, **dadurch gekennzeichnet, dass** der Zugmitteltrieb (220) eine Kette (224) umfasst.

5. Vorrichtung (200) nach Anspruch 4, **dadurch gekennzeichnet, dass** die Kette (224) ein oberes Trum (226) und ein unteres Trum (228) umfasst, und dass zumindest einem der Trume (226, 228) eine Spanneinrichtung (230) zur Spannung der Kette (224) zugeordnet ist.

6. Vorrichtung (200) nach Anspruch 5, **dadurch gekennzeichnet, dass** die Spanneinrichtung (230) eine konvex geformte Gleitplatte (232) umfasst, die das Trum (226, 228) der Kette (224) an ihrer dem Zahnrad (218) abgewandten Seite beaufschlagt.

7. Vorrichtung (200) nach einem der Ansprüche 1 bis 6, **dadurch gekennzeichnet, dass** eine Montageeinrichtung (240) vorhanden und ausgestaltet ist, an einem Fahrgestell (102) des Fahrzeugs montiert zu werden.

8. Vorrichtung (200) nach Anspruch 7, **dadurch gekennzeichnet, dass** die Montageeinrichtung (240) mindestens einen federgelagerten Montageblock (242) zur Festlegung an dem Fahrgestell (102) des Fahrzeugs aufweist.

9. Vorrichtung (200) nach Anspruch 7 oder 8, **dadurch gekennzeichnet, dass** die Montageeinrichtung (240) mindestens einen Montagestift (252) zur Aufnahme in einer Montagestiftaufnahme an dem Fahrgestell (102) des Fahrzeugs aufweist, derart, dass die Vorrichtung (200) relativ zum Fahrgestell (102) begrenzt verdrehbar gelagert ist.

10. Vorrichtung (200) nach einem der Ansprüche 1 bis 9, **dadurch gekennzeichnet, dass** der Drehgeber (212) als ein Multiturn-Absolutwertgeber gebildet ist.

11. Kanalfahrzeug (100) für ein Regallager, mit einer Steuereinrichtung (104), mit einem Fahrgestell (102), dem eine Mehrzahl von Rädern (106) sowie eine Antriebseinrichtung (108) für den motorischen Antrieb mindestens eines der Räder (106) für eine Bewegung in Lagerkanälen des Regallagers zugeordnet ist,
mit einem Lastaufnahmemittel (110) zur Aufnahme mindestens eines Ladehilfsmittels,
und mit einer Vorrichtung (200) zur Wegmessung und/oder Positionsbestimmung nach einem der Ansprüche 1 bis 10, die elektrisch mit der Steuereinrichtung (104) verbunden ist.

12. Kanalfahrzeug (100) nach Anspruch 11, **dadurch gekennzeichnet, dass** eine von der Vorrichtung (200) in Fahrzeuglängsrichtung versetzt angeordnete zweite Vorrichtung (200) zur Wegmessung und/oder Positionsbestimmung nach einem der Ansprüche 1 bis 10 vorhanden und elektrisch mit der Steuereinrichtung (104) verbunden ist.

13. Kanalfahrzeug (100) nach Anspruch 12, **dadurch gekennzeichnet, dass** die Vorrichtung (200) zur Wegmessung und/oder Positionsbestimmung an einer ersten Fahrzeugseite angeordnet ist, und dass die zweite Vorrichtung (200) zur Wegmessung an einer zweiten Fahrzeugseite angeordnet ist.

14. Kanalfahrzeug (100) für ein Regallager,
mit einer Steuereinrichtung (104),
mit einem Fahrgestell (102), dem eine Mehrzahl von Rädern (106) sowie eine Antriebseinrichtung (108) für den motorischen Antrieb mindestens eines der Räder (106) für eine Bewegung in Lagerkanälen des Regallagers zugeordnet ist,
mit einem Lastaufnahmemittel (110) zur Aufnahme mindestens eines Ladehilfsmittels,
und mit einer mit der Steuereinrichtung (104) elektrisch verbundenen Vorrichtung zur Messung des vom Kanalfahrzeug (100) zurückgelegten Wegs, welche ein erstes Laufrad (214) aufweist, das mit einem Drehgeber (212) zur Messung des vom ersten Laufrad (214) zurückgelegten Wegs verbunden ist,
**dadurch gekennzeichnet, dass**
die Vorrichtung zur Messung des vom Kanalfahrzeug (100) zurückgelegten Wegs ein zweites Laufrad (216) umfasst, welches achsparallel in Fahrzeuglängsrichtung unter einem vorbestimmten Abstand zu dem ersten Laufrad (214) angeordnet ist, dass das zweite Laufrad (214) mit einem zweiten Drehgeber (212) zur Messung des vom zweiten Laufrad (216) zurückgelegten Wegs verbunden ist,
dass die Steuereinrichtung (104) ausgebildet ist, einen zeitlichen Verlauf des von dem Drehgeber (212) detektierten Wegs und einen zeitlichen Verlauf des von dem zweiten Drehgeber (212) detektierten Wegs zu erfassen,
und dass die Steuereinrichtung (104) ausgebildet ist, im Falle einer fehlenden zeitlichen Wegveränderung im Verlauf des detektierten Wegs des Einen der beiden Drehgeber (212) den zeitgleich vom Anderen der beiden Drehgeber (212) detektierten Weg für die Wegmessung des Kanalfahrzeugs (100) zu berücksichtigen.

15. Kanalfahrzeug (100) nach Anspruch 14, **dadurch gekennzeichnet, dass** die Steuereinrichtung (104) ausgebildet ist, bei zwei in vorgegebenen Abstand aufeinanderfolgenden fehlenden zeitlichen Wegveränderungen der von den Drehgebern (212) detektierten Wege, einen der beiden zurückgelegten Wege bei der Wegmessung des Kanalfahrzeugs (100) unberücksichtigt zu lassen.
